(19) Europäisches Patentamt
European Patent Office
Office européen des brevets

(11) Veröffentlichungsnummer: **0 383 021**
**A2**

(12) # EUROPÄISCHE PATENTANMELDUNG

(21) Anmeldenummer: **90100721.1**

(22) Anmeldetag: **15.01.90**

(51) Int. Cl.[5]: **C09B 29/085, D06P 1/18**

(30) Priorität: **23.01.89 DE 3901839**

(43) Veröffentlichungstag der Anmeldung: **22.08.90 Patentblatt 90/34**

(84) Benannte Vertragsstaaten: **CH DE FR GB IT LI**

(71) Anmelder: **CASSELLA Aktiengesellschaft**
**Hanauer Landstrasse 526**
**D-6000 Frankfurt am Main 61(DE)**

(72) Erfinder: **Bühler, Ulrich, Dr.**
**Kastanienweg 8**
**D-8755 Alzenau(DE)**

(74) Vertreter: **Urbach, Hans-Georg, Dr. et al**
**Hanauer Landstrasse 526**
**D-6000 Frankfurt am Main 61(DE)**

(54) **Monoazofarbstoffe, ihre Herstellung und Verwendung.**

(57) Monoazofarbstoffe der Formel I

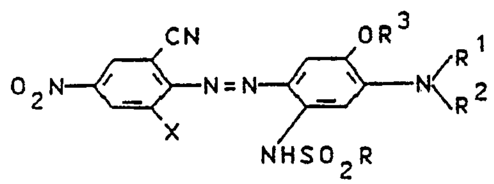

(I)

in der
X Cyan, Chlor oder Brom,
R Alkyl mit 1 bis 8 C-Atomen,
$R^1$ $(CH_2)_nCN$ oder $(CH_2)_nCOOR^4$,
$R^2$ H, Allyl, Buten-2-yl oder Alkyl mit 1 bis 6 C-Atomen,
$R^3$ Methyl, Ethyl oder Alkoxyethyl mit 1 bis 4 C-Atomen in der Alkoxygruppe,
$R^4$ Alkyl mit 1 bis 8 C-Atomen und
n 2, 3, 4 oder 5
bedeuten, sind hervorragend zum Färben und Bedrucken von hydrophoben Fasermaterialien geeignet.

EP 0 383 021 A2

## Monoazofarbstoffe, ihre Herstellung und Verwendung

Die vorliegende Erfindung betrifft wertvolle Monoazofarbstoffe der allgemeinen Formel I

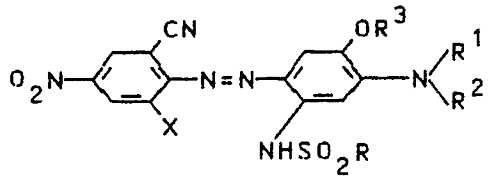 (I)

in der
X Cyan, Chlor oder Brom,
R Alkyl mit 1 bis 8 C-Atomen,
$R^1$ $(CH_2)_nCN$ oder $(CH_2)_nCOOR^4$,
$R^2$ H, Allyl, Buten-2-yl oder Alkyl mit 1 bis 6 C-Atomen,
$R^3$ Methyl, Ethyl oder Alkoxyethyl mit 1 bis 4 C-Atomen in der Alkoxygruppe,
$R^4$ Alkyl mit 1 bis 8 C-Atomen und
n 2, 3, 4 oder 5
bedeuten.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Die für R, $R^2$ und $R^4$ stehenden Alkylreste und die Alkoxygruppe in dem für $R^3$ stehenden Alkoxyethylrest können geradkettig oder verzweigt sein.

Der für R bzw. $R^4$ stehende Alkylrest mit 1 bis 8 C-Atomen kann beispielsweise sein: Methyl, Ethyl, n-Propyl, i-Propyl, n-Butyl, i-Butyl, sek.Butyl, tert.Butyl, n-Pentyl, i-Pentyl, Pentyl-2, Pentyl-3, n-Hexyl, 2-Ethylbutyl, n-Heptyl, i-Heptyl, Octyl-2, 2-Ethylhexyl.

Bevorzugte Reste R sind Alkyl mit 1 bis 6 C-Atomen, besonders bevorzugte Reste R sind Alkyl mit 1 bis 4 C-Atomen.

Für n ist die Zahl 3 und insbesondere die Zahl 2 bevorzugt. Für $R^1$ sind $(CH_2)_nCN$ und insbesondere Cyanethyl bevorzugt.

In den für $R^1$ stehenden Resten der Formel $(CH_2)_nCOOR^4$ sind für $R^4$ Alkyl mit 1 bis 5 C-Atomen und besonders Alkyl mit 1 bis 3 C-Atomen bevorzugt. Bevorzugt steht für n auch hier 2.

Der für $R^2$ stehende Alkylrest mit 1 bis 6 C-Atomen kann beispielsweise sein: Methyl, Ethyl, n-Propyl, i-Propyl, n-Butyl, i-Butyl, n-Pentyl und n-Hexyl.

Bevorzugte Reste $R^2$ sind Alkyl mit 1 bis 4 C-Atomen und insbesondere lineare Alkylreste. Besonders bevorzugte Reste $R^2$ sind Allyl, Ethyl und n-Propyl.

Alkoxygruppen mit 1 bis 4 C-Atomen in Alkoxyethylresten, die für $R^2$ stehen können, sind: Methoxy, Ethoxy, n-Propoxy, i-Propoxy, n-Butoxy, i-Butoxy, sek.Butoxy und tert.-Butoxy. Bevorzugte Reste $R^3$ sind Ethyl, Methoxyethyl und Ethoxyethyl. Ein besonders bevorzugter Rest $R^3$ ist Methyl.

Bevorzugte Farbstoffe der Formel I sind solche mit bevorzugten Resten R, $R^1$, $R^2$, $R^3$ und $R^4$. Besonders bevorzugte Farbstoffe der Formel I sind solche mit besonders bevorzugten Resten R, $R^1$, $R^2$, $R^3$ und n gleich 2 und insbesondere solche, in denen X für Chlor oder Brom steht.

Den erfindungsgemäßen Farbstoffen ähnliche Farbstoffe sind bereits bekannt und zuletzt in der EP 282 852 beschrieben.

Es wurde jedoch überraschenderweise gefunden, daß die erfindungsgemäßen Farbstoffe diesen Farbstoffen, insbesondere in den Applikationsechtheiten, wie pH-Empfindlichkeit, Reduktionsempfindlichkeit und Verkochechtheit, sowie in der Farbstärke überlegen sind und sehr gute Gebrauchsechtheiten, wie Thermomigrationsechtheit, Thermofixierechtheit und Wasserechtheit besitzen.

Die Herstellung der erfindungsgemäßen Farbstoffe der Formel I, in der X für Chlor oder Brom steht, erfolgt vorzugsweise dadurch, daß man ein Amin der Formel II

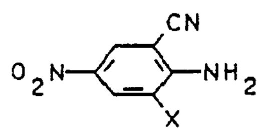

(II)

in der X für Chlor oder Brom steht, diazotiert und auf ein Amin der Formel III

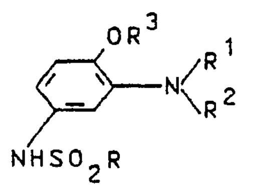

(III)

in der R, $R^1$, $R^2$ und $R^3$ die oben angegebenen Bedeutungen haben, kuppelt.

Die Diazotierung der Amine der allgemeinen Formel II erfolgt in an sich bekannter Weise durch Einwirkung von salpetriger Säure oder anderen Nitrosoniumionen bildenden Systemen in einem sauren wäßrigen Medium, einer Niederalkancarbonsäure, wie z.B. Ameisensäure, Essigsäure oder Propionsäure oder deren Mischungen oder einem organischen Lösungsmittel bei Temperaturen von 0°C bis 40°C.

Die Kupplung erfolgt ebenfalls in an sich bekannter Weise durch Vereinigung der erhaltenen Diazolösung mit einer Lösung der Kupplungskomponente der Formel III bei Tempe raturen von 0 bis 40°C, vorzugsweise 0 bis 25°C, in einem geeigneten Lösungsmittel, zie z.B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel I, in der X für Chlor oder Brom steht und die übrigen Reste die oben angegebenen Bedeutungen haben, kann isoliert werden.

Die Herstellung der erfindungsgemäßen Farbstoffe der Formel I, in der X für Cyan steht, erfolgt vorzugsweise dadurch, daß man einen Azofarbstoff der Formel IV

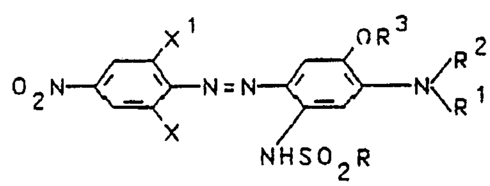

(IV)

in der X für Cyan, Chlor und vorzugsweise Brom und $X^1$ für Chlor oder vorzugsweise Brom steht und R, $R^1$, $R^2$ und $R^3$ die oben angegebenen Bedeutungen haben, in an sich bekannter Weise z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nukleophilen Austauschreaktion unterwirft, wobei als nucleophiles Agenz das Cyanidion $CN^{\ominus}$ eingesetzt wird. Bei dieser Reaktion werden in dem Farbstoff der Formel IV $X^1$ und für X stehendes Chlor oder Brom gegen CN ausgetauscht.

Als Lösungsmittel für die Austauschreaktion werden inerte organische Lösungsmittel, wie z.B. Nitrobenzol oder Glykol- oder Diglykol-mono-methyl oder -mono-ethylether oder Mischungen solcher Lösungsmittel untereinander und mit tertiären organischen Stickstoffbasen, dipolare aprotische Lösungsmitel, wie z.B. N-Methylpyrrolidon, Pyridin, Dimethylformamid, Dimethylsulfoxid oder Dicyan-dialkyl-thioether eingesetzt. Weiterhin sind als Medium für die Austauschreaktion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen

Stickstoffverbindungen, wie z.B. Pyridin und Pyridinbasen, aus.

Die Reaktionstemperaturen für die Austauschreaktion liegen normalerweise zwischen 20 und 150°C.

Das nucleophile Agenz $CN^{\ominus}$ wird der Reaktion in Form eines gegebenenfalls komplexen Metallcyanids, wie z.B. eines Alkali- oder Erdalkalicyanids, Zinkcyanids, Alkali-cyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkali-cyanid:Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe erforderlichen Farbstoffe der Formel IV können dadurch hergestellt werden, daß eine Diazoniumverbindung eines aromatischen Amins der allgemeinen Formel V

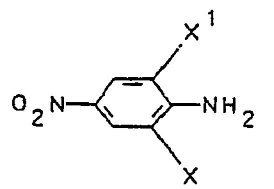

(V)

in an sich bekannter Weise auf ein Amin der Formel III kuppelt, wobei die Reste X, $X^1$, R, $R^1$, $R^2$ und $R^3$ die oben angegebenen Bedeutungen haben.

Erfindungsgemäße Farbstoffmischungen bestehen aus zwei oder mehreren Farbstoffen der Formel I, in der $R^1$, $R^2$, $R^3$ und $R^4$ die oben angegebenen Bedeutungen haben. Bevorzugt sind Mischungen aus bevorzugten Farbstoffen der Formel I, und dabei insbesondere solcher, die sich nur in der Bedeutung des Restes $R^1$ unterscheiden.

In den erfindungsgemäßen Farbstoffmischungen kann das Verhältnis der verschiedenen Farbstoffe der allgemeinen Formel I in relativ weiten Grenzen variieren, und die Farbstoffe können als Kristallmischungen oder ganz oder teilweise in Form von Mischkristallen vorliegen. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Farbstoffmischungen können nach verschiedenen Verfahren hergestellt werden, so z.B.:

1) Durch Mischen von mindestens zwei separat hergestellten und formierten Einzelfarbstoffen der Formel I.

2) Durch Mischen der separat hergestellten, nicht formierten Einzelfarbstoffe und gemeinsame Formierung.

3) Durch Mischen der Ausgangsmaterialien der allgemeinen Formeln II und III, IV und III oder IV und gemeinsame weitere Umsetzung wie oben beschrieben. Wird z.B. bei dem oben beschriebenen Verfahren des Cyanaustausches anstelle eines Einzelfarbstoffs der Formel IV eine Mischung von zwei oder mehreren Farbstoffen der Formel IV, die sich bezüglich R, $R^1$, $R^2$ oder $R^3$ unterscheiden, eingesetzt, so erhält man die entsprechende Mischung der erfindungsmäßen Farbstoffe der Formel I, in der X für Cyan steht.

Wird z. B. bei dem oben beschriebenen Verfahren der Diazotierung und Kupplung eine Mischung zweier diazotierter Amine der Formel II auf ein Amin der Formel III gekuppelt oder ein diazotiertes Amin der Formel II auf eine Mischung zweier oder mehrerer Amine der Formel III gekuppelt, wobei X, R, $R^1$, $R^2$ und $R^3$ die angegebenen Bedeutungen haben, so erhält man die entsprechenden Mischungen der erfindungsgemäßen Farbstoffe der Formel I, in der X für Chlor oder Brom steht.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1$/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230°C mit HT-Dampft, Druckdampf oder Trockenhitze behandelt wird. Man erhält auf diese Weise sehr farbstarke grünstichig blaue Färbungen und Drucke mit sehr guten Echtheitseigenschaften, insbesondere einer sehr guten Licht, Thermofixier-, Thermomigrier- und Waschechtheit, vor allem einer sehr guten M+S-Echtheit (C4A-Wäsche).

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden. In den bei obigen Applikationen eingesetzten Färbeflotten und Druckpasten sollen die erfindungsgemäßen Farbstoffe bzw. Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 $\mu$m, vorzugsweise bei etwa 1 $\mu$m.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglykolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch Kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1:

24,2 g 2-Brom-6-cyan-4-nitranilin werden bei 15 bis 20°C in einer Mischung aus 100 g konzentrierter Schwefelsäure und 100 g Eisessig mit 32,5 g 41,4%iger Nitrosylschwefelsäure diazotiert und bei 10 bis 15°C auf 34,0 g 2-(N-Allyl-N-cyanethyl)-amino-4-ethylsulfonylaminoanisol, die in 400 ml Wasser durch Zugabe von 30,0 ml konzentrierter Salzsäure gelöst wurden, unter direkter Kühlung mit 500 g Eis gekuppelt. Nach beendeter Kupplung wird der entstehende Farbstoff filtriert, mit Wasser neutral gewaschen und getrocknet. Es werden 50,5 g des Farbstoffs der Formel

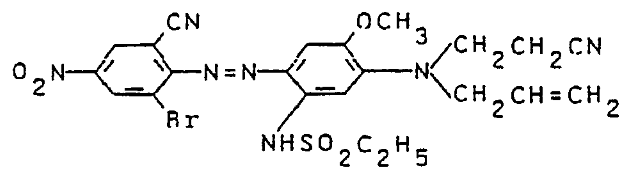

erhalten, der sein Absorptionsmaximum bei 586 mm hat und sich in o-Dichlorbenzol mit blauer Farbe löst.

0,6 g des so erhaltenen Farbstoffs werden in feindispergierter Form in 2000 g Wasser eingerührt. Die Dispersion wird mit Essigsäure auf einen pH-Wert von 5 bis 6 eingestellt und mit 4,0 g Ammoniumsulfat und 2,0 g eines handelsüblichen dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalats ein und färbt 1 h bei 130°C.

Nach anschließendem Spülen, reduktiver Nachbehandlung mit einer 0,2%igen Natriumdithionitlösung während 15 min bei 70 bis 80°C, Spülen und Trocknen erhält man eine farbstarke blaue Färbung mit sehr guten coloristischen Eigenschaften, insbesondere sehr guter Thermofixier-, Thermomigrier- und Waschechtheit.

Beispiel 2:

In eine Suspension aus 100 ml Dimethylsulfoxid, 2,1 g Natriumcyanid und 7,1 g Kupfer-I-cyanid werden bei 70 bis 75°C 57,7 g des Farbstoffs aus Beispeil 1 eingetragen und 30 min bei dieser Temperatur gerührt. Dann wird die Temperatur 30 min auf 110°C angehoben und der Ansatz anschließened langsam kaltgerührt, abgesaugt, mit 45 ml Dimethylsulfoxid, 7.5%iger wäßriger Ammoniaklösung und Wasser gewaschen und unter vermindertem Druck getrocknet. Man erhält so 37 g des Farbstoffs der Formel

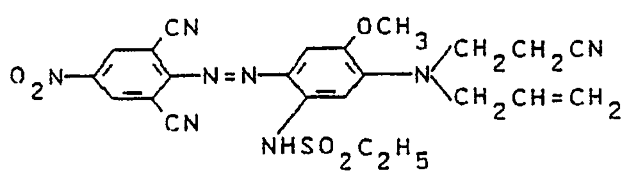

der bei 621 µm sein Absorptionsmaximum hat und sich in o-Dichlorbenzol mit blauer Farbe löst.

20,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitonensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, erneut gespült und getrocknet, so erhält man einen farbstarken blauen Druck von sehr guten coloristischen Eigenschaften.

In der nachstehenden Tabelle sind weitere erfindungsgemäße Farbstoffe angegeben, die auf Polyestermaterialien ebenfalls farbstarke blaue Färbungen bzw. Drucke mit ebenfalls sehr guten coloristischen

Eigenschaften liefern.

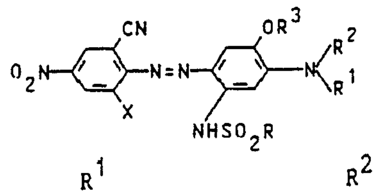

| X | R | $R^1$ | $R^2$ | $R^3$ |
|---|---|---|---|---|
| Br | $CH_3$ | $(CH_2)_2CN$ | $CH_2CH=CH_2$ | $CH_3$ |
| Cl | $CH_3$ | $(CH_2)_2CN$ | $CH_2CH=CH_2$ | $CH_3$ |
| Br | $CH_3$ | $(CH_2)_2CN$ | $C_2H_5$ | $CH_3$ |
| Cl | $CH_3$ | $(CH_2)_2CN$ | $C_2H_5$ | $CH_3$ |
| CN | $CH_3$ | $(CH_2)_2CN$ | $CH_2CH=CH_2$ | $CH_3$ |
| Br | $CH_3$ | $(CH_2)_2CN$ | $nC_3H_7$ | $CH_3$ |
| Cl | $CH_3$ | $(CH_2)_2CN$ | $nC_4H_9$ | $CH_3$ |
| Br | $CH_3$ | $(CH_2)_2CN$ | $iC_4H_9$ | $CH_3$ |
| Br | $CH_3$ | $(CH_2)_2CN$ | $nC_6H_{13}$ | $CH_3$ |
| Br | $CH_3$ | $(CH_2)_2CN$ | $C_2H_5$ | $C_2H_5$ |
| Cl | $CH_3$ | $(CH_2)_2CN$ | $CH_2CH=CH-CH_3$ | $CH_3$ |
| Br | $CH_3$ | $(CH_2)_3CN$ | $CH_2CH=CH_2$ | $CH_3$ |
| Br | $CH_3$ | $(CH_2)_3CN$ | H | $(CH_2)_2OCH_3$ |
| Cl | $CH_3$ | $(CH_2)_3CN$ | $nC_4H_9$ | $C_2H_5$ |
| CN | $CH_3$ | $(CH_2)_3CN$ | $nC_4H_9$ | $CH_3$ |
| Br | $CH_3$ | $(CH_2)_2COOCH_3$ | $nC_5H_{11}$ | $CH_3$ |
| Br | $CH_3$ | $(CH_2)_2COOiC_3H_7$ | $CH_2CH=CH_2$ | $CH_3$ |
| Cl | $CH_3$ | $(CH_2)_2COOsek.C_4H_9$ | $CH_3$ | $CH_3$ |
| Br | $CH_3$ | $(CH_2)_2COOCH_2CH(C_2H_5)C_4H_9$ | H | $C_2H_5$ |
| CN | $CH_3$ | $(CH_2)_2COOCH_2CH(C_2H_5)C_4H_9$ | H | $(CH_2)_2OC_2H_5$ |
| Cl | $CH_3$ | $(CH_2)_3COOnC_3H_7$ | $C_2H_5$ | $CH_3$ |
| Br | $CH_3$ | $(CH_2)_3COOCH(C_2H_5)_2$ | $CH_2CH=CH_2$ | $C_2H_5$ |
| Br | $CH_3$ | $(CH_2)_3COOCH(CH_3)C_2H_5$ | H | $C_2H_5$ |

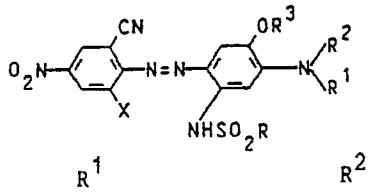

| X | R | $R^1$ | $R^2$ | $R^3$ |
|---|---|---|---|---|
| Br | $CH_3$ | $(CH_2)_4COOC_2H_5$ | $nC_3H_7$ | $CH_3$ |
| Cl | $C_2H_5$ | $(CH_2)_2CN$ | $CH_2CH{=}CH_2$ | $CH_3$ |
| Br | $C_2H_5$ | $(CH_2)_2CN$ | $C_2H_5$ | $CH_3$ |
| Cl | $C_2H_5$ | $(CH_2)_2CN$ | $CH_2CH{=}CHCH_3$ | $CH_3$ |
| Br | $C_2H_5$ | $(CH_2)_2CN$ | $nC_3H_7$ | $C_2H_5$ |
| Br | $C_2H_5$ | $(CH_2)_2CN$ | $nC_4H_9$ | $CH_3$ |
| Cl | $C_2H_5$ | $(CH_2)_2CN$ | $iC_5H_{11}$ | $CH_3$ |
| Br | $C_2H_5$ | $(CH_2)_2CN$ | H | $C_2H_5$ |
| Br | $C_2H_5$ | $(CH_2)_3CN$ | H | $(CH_2)_2OCH_3$ |
| Cl | $C_2H_5$ | $(CH_2)_2CN$ | $CH_2CH{=}CH_2$ | $(CH_2)_2OiC_3H_7$ |
| Cl | $C_2H_5$ | $(CH_2)_3CN$ | $C_2H_5$ | $C_2H_5$ |
| Br | $C_2H_5$ | $(CH_2)_3CN$ | $C_5H_{11}$-3 | $CH_3$ |
| CN | $C_2H_5$ | $(CH_2)_3CN$ | $nC_6H_{13}$ | $CH_3$ |
| Cl | $C_2H_5$ | $(CH_2)_4CN$ | $nC_3H_7$ | $CH_3$ |
| Br | $C_2H_5$ | $(CH_2)_2COOC_2H_5$ | $nC_4H_9$ | $CH_3$ |
| Cl | $C_2H_5$ | $(CH_2)_2COOnC_4H_9$ | $CH_2CH{=}CH_2$ | $C_2H_5$ |
| Br | $C_2H_5$ | $(CH_2)_2COOnC_4H_9$ | $C_2H_5$ | $CH_3$ |
| Br | $C_2H_5$ | $(CH_2)_2COOnC_3H_7$ | $nC_4H_9$ | $(CH_2)_2OnC_4H_9$ |
| Cl | $C_2H_5$ | $(CH_2)_2COOCH_2CH(C_2H_5)C_4H_9$ | $CH_3$ | $C_2H_5$ |
| CN | $C_2H_5$ | $(CH_2)_2COOCH(CH_3)C_4H_9$ | H | $C_2H_5$ |
| Br | $C_2H_5$ | $(CH_2)_3COOCH_3$ | $nC_5H_{11}$ | $CH_3$ |
| Br | $C_2H_5$ | $(CH_2)_2COOsek.C_4H_9$ | $CH_2CH{=}CH_2$ | $CH_3$ |

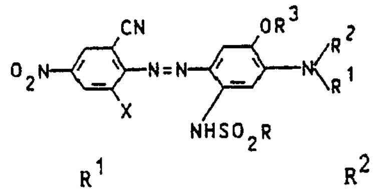

| X | R | $R^1$ | $R^2$ | $R^3$ |
|---|---|---|---|---|
| CN | $C_2H_5$ | $(CH_2)_3COOCH_2CH(C_2H_5)_2$ | $C_2H_5$ | $C_2H_5$ |
| Br | $C_2H_5$ | $(CH_2)_4COOnC_3H_7$ | $nC_3H_7$ | $CH_3$ |
| Cl | $C_2H_5$ | $(CH_2)_5COOCH_3$ | $nC_4H_9$ | $CH_3$ |
| Br | $nC_3H_7$ | $(CH_2)_2CN$ | $CH_2CH=CH_2$ | $CH_3$ |
| Cl | $nC_3H_7$ | $(CH_2)_2CN$ | $CH_2CH=CH_2$ | $CH_3$ |
| Br | $nC_3H_7$ | $(CH_2)_2CN$ | $CH_3$ | $(CH_2)_2OCH_3$ |
| Br | $nC_3H_7$ | $(CH_2)_2CN$ | $C_2H_5$ | $CH_3$ |
| Cl | $nC_3H_7$ | $(CH_2)_2CN$ | $nC_3H_7$ | $CH_3$ |
| CN | $nC_3H_7$ | $(CH_2)_2CN$ | $nC_3H_7$ | $C_2H_5$ |
| Br | $nC_3H_7$ | $(CH_2)_2CN$ | $nC_4H_9$ | $CH_3$ |
| Br | $nC_3H_7$ | $(CH_2)_2CN$ | $nC_6H_{13}$ | $CH_3$ |
| Cl | $nC_3H_7$ | $(CH_2)_2CN$ | $CH_2CH=CHCH_3$ | $CH_3$ |
| CN | $nC_3H_7$ | $(CH_2)_2CN$ | H | $(CH_2)_2OnC_4H_9$ |
| Br | $nC_3H_7$ | $(CH_2)_2CN$ | H | $(CH_2)_2OCH_3$ |
| Br | $nC_3H_7$ | $(CH_2)_2CN$ | $CH_2CH=CH_2$ | $C_2H_5$ |
| Cl | $nC_3H_7$ | $(CH_2)_3CN$ | $C_2H_5$ | $CH_3$ |
| Br | $nC_3H_7$ | $(CH_2)_3CN$ | $CH_2CH=CH_2$ | $C_2H_5$ |
| Br | $nC_3H_7$ | $(CH_2)_3CN$ | $nC_5H_{11}$ | $CH_3$ |
| Br | $nC_3H_7$ | $(CH_2)_3CN$ | $nC_3H_7$ | $(CH_2)_2OC_2H_5$ |
| Cl | $nC_3H_7$ | $(CH_2)_2COOC_2H_5$ | $nC_4H_9$ | $C_2H_5$ |
| Br | $nC_3H_7$ | $(CH_2)_2COOnC_4H_9$ | $C_2H_5$ | $CH_3$ |
| Cl | $nC_3H_7$ | $(CH_2)_2COOiC_3H_7$ | H | $(CH_2)_2OCH_3$ |
| Cl | $nC_3H_7$ | $(CH_2)_2COOCH_2CH(CH_3)_2$ | $CH_2CH=CH_2$ | $CH_3$ |

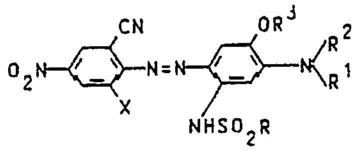

| X | R | $R^1$ | $R^2$ | $R^3$ |
|---|---|---|---|---|
| CN | $nC_3H_7$ | $(CH_2)_2COOCH_2CH(C_2H_5)_2$ | H | $C_2H_5$ |
| CN | $nC_3H_7$ | $(CH_2)_2COOCH_2CH(C_2H_5)C_4H_9$ | H | $(CH_2)_2OC_2H_5$ |
| Br | $nC_3H_7$ | $(CH_2)_2COOiC_4H_9$ | $C_2H_5$ | $CH_3$ |
| Br | $nC_3H_7$ | $(CH_2)_2COOCH_2CH(CH_3)C_2H_5$ | H | $(CH_2)_2OCH_3$ |
| Cl | $nC_3H_7$ | $(CH_2)_3COOCH_3$ | $nC_6H_{13}$ | $CH_3$ |
| Br | $nC_3H_7$ | $(CH_2)_3COOnC_4H_9$ | $nC_4H_9$ | $CH_3$ |
| Cl | $nC_3H_7$ | $(CH_2)_3COOiC_5H_{11}$ | $CH_2CH=CH_2$ | $CH_3$ |
| CN | $nC_3H_7$ | $(CH_2)_3COOsek.C_4H_9$ | H | $C_2H_5$ |
| Br | $nC_3H_7$ | $(CH_2)_4COOC_2H_5$ | H | $CH_3$ |
| Cl | $nC_3H_7$ | $(CH_2)_5COOnC_3H_7$ | $C_2H_5$ | $CH_3$ |
| Br | $iC_3H_7$ | $(CH_2)_2CN$ | $C_2H_5$ | $CH_3$ |
| Br | $iC_3H_7$ | $(CH_2)_2CN$ | $CH_2CH=CH_2$ | $CH_3$ |
| Cl | $iC_3H_7$ | $(CH_2)_2CN$ | $CH_2CH=CH_2$ | $C_2H_5$ |
| Cl | $iC_3H_7$ | $(CH_2)_2CN$ | $C_2H_5$ | $CH_3$ |
| Br | $iC_3H_7$ | $(CH_2)_2CN$ | $nC_3H_7$ | $CH_3$ |
| Br | $iC_3H_7$ | $(CH_2)_2CN$ | $nC_4H_9$ | $CH_3$ |
| Br | $iC_3H_7$ | $(CH_2)_2CN$ | $nC_6H_{13}$ | $(CH_2)_2OCH_3$ |
| CN | $iC_3H_7$ | $(CH_2)_2CN$ | $CH_2CH=CH_2$ | $C_2H_5$ |
| Cl | $iC_3H_7$ | $(CH_2)_2CN$ | $sek.C_4H_9$ | $CH_3$ |
| CN | $iC_3H_7$ | $(CH_2)_2CN$ | H | $C_2H_5$ |
| Br | $iC_3H_7$ | $(CH_2)_3CN$ | $C_2H_5$ | $CH_3$ |
| Br | $iC_3H_7$ | $(CH_2)_3CN$ | $CH_2CH=CH_2$ | $CH_3$ |

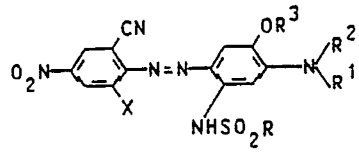

| X | R | $R^1$ | $R^2$ | $R^3$ |
|---|---|---|---|---|
| Cl | $iC_3H_7$ | $(CH_2)_2COOnC_3H_7$ | $nC_3H_7$ | $C_2H_5$ |
| Br | $iC_3H_7$ | $(CH_2)_2COOtert.C_4H_9$ | H | $(CH_2)_2OCH_3$ |
| CN | $iC_3H_7$ | $(CH_2)_2COOCH_2CH(C_2H_5)_2$ | $nC_6H_{13}$ | $CH_3$ |
| Cl | $iC_3H_7$ | $(CH_2)_2COOiC_4H_9$ | $nC_4H_9$ | $CH_3$ |
| Br | $iC_3H_7$ | $(CH_2)_3COOC_2H_5$ | $C_2H_5$ | $CH_3$ |
| Br | $iC_3H_7$ | $(CH_2)_3COOnC_6H_{13}$ | $CH_2CH=CH_2$ | $CH_3$ |
| Cl | $iC_3H_7$ | $(CH_2)_4CN$ | H | $(CH_2)_2OCH_3$ |
| Br | $iC_3H_7$ | $(CH_2)_4COOnC_3H_7$ | $nC_3H_7$ | $CH_3$ |
| Br | $nC_4H_9$ | $(CH_2)_2CN$ | $CH_2CH=CH_2$ | $CH_3$ |
| Cl | $nC_4H_9$ | $(CH_2)_2CN$ | $C_2H_5$ | $CH_3$ |
| Br | $nC_4H_9$ | $(CH_2)_2CN$ | $CH_3$ | $CH_3$ |
| Br | $nC_4H_9$ | $(CH_2)_2CN$ | H | $(CH_2)_2OCH_3$ |
| CN | $nC_4H_9$ | $(CH_2)_2CN$ | $nC_4H_9$ | $CH_3$ |
| Cl | $nC_4H_9$ | $(CH_2)_2CN$ | $CH_2CH=CHCH_3$ | $CH_3$ |
| Br | $nC_4H_9$ | $(CH_2)_2CN$ | $nC_6H_{13}$ | $CH_3$ |
| Br | $nC_4H_9$ | $(CH_2)_2CN$ | $CH_2CH=CH_2$ | $(CH_2)_2Osek.C_4H_9$ |
| Cl | $nC_4H_9$ | $(CH_2)_3CN$ | $nC_3H_7$ | $C_2H_5$ |
| Br | $nC_4H_9$ | $(CH_2)_2COOC_2H_5$ | $nC_5H_{11}$ | $CH_3$ |
| Cl | $nC_4H_9$ | $(CH_2)_2COOnC_4H_9$ | $CH_3$ | $C_2H_5$ |
| Br | $nC_4H_9$ | $(CH_2)_2COOsek.C_4H_9$ | $iC_3H_7$ | $CH_3$ |
| CN | $nC_4H_9$ | $(CH_2)_4COOnC_7H_{15}$ | $CH_2CH=CH_2$ | $CH_3$ |
| Br | $nC_4H_9$ | $(CH_2)_3COOnC_3H_7$ | $C_2H_5$ | $CH_3$ |

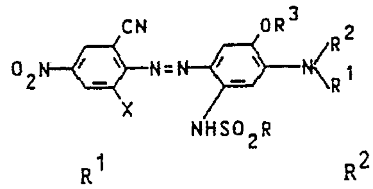

| X | R | $R^1$ | $R^2$ | $R^3$ |
|---|---|---|---|---|
| Br | $nC_4H_9$ | $(CH_2)_5CN$ | H | $(CH_2)_2OC_2H_5$ |
| Br | $iC_4H_9$ | $(CH_2)_2CN$ | $CH_2CH{=}CH_2$ | $CH_3$ |
| Cl | $iC_4H_9$ | $(CH_2)_2CN$ | $C_2H_5$ | $CH_3$ |
| CN | $iC_4H_9$ | $(CH_2)_3CN$ | $nC_3H_7$ | $C_2H_5$ |
| Br | $iC_4H_9$ | $(CH_2)_2COOsek.C_4H_9$ | $CH_2CH{=}CH_2$ | $CH_3$ |
| Br | $iC_4H_9$ | $(CH_2)_2COOnC_6H_{13}$ | H | $(CH_2)_2OCH_3$ |
| Br | $sek.C_4H_9$ | $(CH_2)_2CN$ | $nC_3H_7$ | $CH_3$ |
| Br | $sek.C_4H_9$ | $(CH_2)_2CN$ | $CH_2CH{=}CH_2$ | $CH_3$ |
| Cl | $sek.C_4H_9$ | $(CH_2)_3CN$ | $iC_4H_9$ | $CH_3$ |
| Cl | $sek.C_4H_9$ | $(CH_2)_2COOnC_4H_9$ | $CH_3$ | $C_2H_5$ |
| Br | $sek.C_4H_9$ | $(CH_2)_4CN$ | $nC_4H_9$ | $CH_3$ |
| Br | $C(CH_3)_3$ | $(CH_2)_2CN$ | $C_2H_5$ | $CH_3$ |
| Br | $C(CH_3)_3$ | $(CH_2)_2CN$ | $CH_2CH{=}CH_2$ | $CH_3$ |
| Cl | $C(CH_3)_3$ | $(CH_2)_4COOiC_3H_7$ | $nC_3H_7$ | $CH_3$ |
| Br | $CH(CH_3)C_3H_7$ | $(CH_2)_2CN$ | $nC_4H_9$ | $CH_3$ |
| Cl | $CH(CH_3)C_3H_7$ | $(CH_2)_2COOiC_3H_7$ | $C_2H_5$ | $CH_3$ |
| Br | $CH(C_2H_5)_2$ | $(CH_2)_2CN$ | $C_5H_{11}$-2 | $CH_3$ |
| Cl | $CH(C_2H_5)_2$ | $(CH_2)_3CN$ | $CH_2CH{=}CHCH_3$ | $CH_3$ |
| Br | $CH(C_2H_5)_2$ | $(CH_2)_4COOCH_3$ | $CH_3$ | $CH_3$ |
| Cl | $nC_5H_{11}$ | $(CH_2)_2CN$ | $C_2H_5$ | $CH_3$ |
| Br | $nC_5H_{11}$ | $(CH_2)_4CN$ | $nC_3H_7$ | $C_2H_5$ |
| CN | $nC_5H_{11}$ | $(CH_2)_2COOCH_3$ | $CH_2CH{=}CH_2$ | $CH_3$ |

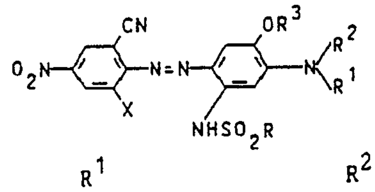

| X | R | $R^1$ | $R^2$ | $R^3$ |
|---|---|---|---|---|
| CN | $nC_6H_{13}$ | $(CH_2)_2COOC_2H_5$ | H | $(CH_2)_2OC_2H_5$ |
| CN | $nC_6H_{13}$ | $(CH_2)_2CN$ | $nC_5H_{11}$ | $CH_3$ |
| Br | $nC_6H_{13}$ | $(CH_2)_3CN$ | H | $(CH_2)_2OiC_3H_7$ |
| Br | $nC_6H_{13}$ | $(CH_2)_2COOsek.C_4H_9$ | $C_2H_5$ | $CH_3$ |
| Cl | $nC_6H_{13}$ | $(CH_2)_4CN$ | $C_2H_5$ | $CH_3$ |
| Cl | $CH_2CH(C_2H_5)_2$ | $(CH_2)_2CN$ | $CH_3$ | $CH_3$ |
| Br | $CH_2CH(C_2H_5)_2$ | $(CH_2)_2COOC_2H_5$ | $nC_4H_9$ | $CH_3$ |
| Cl | $CH_2CH(C_2H_5)_2$ | $(CH_2)_3CN$ | $CH_2CH=CH_2$ | $CH_3$ |
| Br | $CH(CH_3)C_4H_9$ | $(CH_2)_2CN$ | H | $CH_3$ |
| Br | $nC_7H_{15}$ | $(CH_2)_2CN$ | $C_2H_5$ | $CH_3$ |
| Br | $CH_2CH(C_2H_5)C_4H_9$ | $(CH_2)_2CN$ | H | $(CH_2)_2OCH_3$ |
| Cl | $CH_2CH(C_2H_5)C_4H_9$ | $(CH_2)_3CN$ | H | $(CH_2)_2OC_2H_5$ |
| CN | $CH_2CH(C_2H_5)C_4H_9$ | $(CH_2)_2CN$ | H | $C_2H_5$ |
| Br | $CH_2CH(C_2H_5)C_4H_9$ | $(CH_2)_2COOC_2H_5$ | H | $(CH_2)_2OCH_3$ |
| Br | $CH_2CH(C_2H_5)C_4H_9$ | $(CH_2)_2COOnC_3H_7$ | $CH_2CH=CH_2$ | $CH_3$ |

## Ansprüche

1. Monoazofarbstoffe der allgemeinen Formel I

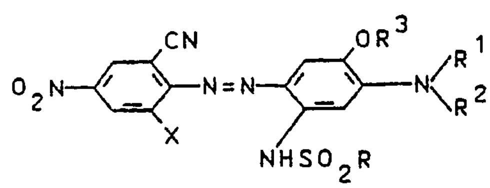

(I)

in der
X Cyan, Chlor oder Brom,
R Alkyl mit 1 bis 8 C-Atomen,
$R^1$ $(CH_2)_nCN$ oder $(CH_2)_nCOOR^4$,
$R^2$ H, Allyl, Buten-2-yl oder Alkyl mit 1 bis 6 C-Atomen,
$R^3$ Methyl, Ethyl oder Alkoxyethyl mit 1 bis 4 C-Atomen in der Alkoxygruppe,
$R^4$ Alkyl mit 1 bis 8 C-Atomen und
n 2, 3, 4 oder 5
bedeuten.

2. Monoazofarbstoffe nach Anspruch 1, dadurch gekennzeichnet, daß R Alkyl mit 1 bis 6 C-Atomen bedeutet.

3. Monoazofarbstoffe nach Anspruch 1 oder 2, dadurch gekennzeichnet, daß R Alkyl mit 1 bis 4 C-Atomen bedeutet.

4. Monoazofarbstoffe nach einem oder mehreren der Ansprüche 1 bis 3, dadurch gekennzeichnet, daß n 3 oder vorzugsweise 2 bedeutet.

5. Monoazofarbstoffe nach einem oder mehreren der Ansprüche 1 bis 4, dadurch gekennzeichnet, daß $R^1$ für Cyanethyl steht.

6. Monoazofarbstoffe nach einem oder mehreren der Ansprüche 1 bis 5, dadurch gekennzeichnet, daß $R^1$ für $(CH_2)_2COOR^4$ steht und $R^4$ für Alkyl mit 1 bis 3 C-Atomen steht.

7. Monoazofarbstoffe nach einem oder mehreren der Ansprüche 1 bis 6, dadurch gekennzeichnet, daß $R^2$ für Allyl oder lineares Alkyl mit 1 bis 4 C-Atomen steht.

8. Farbstoffmischungen, dadurch gekennzeichnet, daß sie zwei oder mehrere Azofarbstoffe nach einem oder mehreren der Ansprüche 1 bis 7 enthalten.

9. Verfahren zur Herstellung von Azofarbstoffen der Formel I des Anspruchs 1, dadurch gekennzeichnet, daß man ein Amin der Formel II,

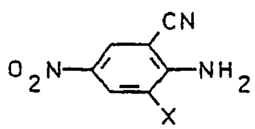

(II)

in der X für Chlor oder Brom steht, diazotiert und auf ein Amin der Formel III

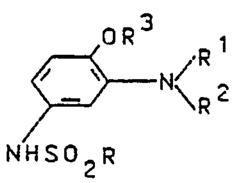

(III)

kuppelt oder daß man einen Azofarbstoff der Formel IV,

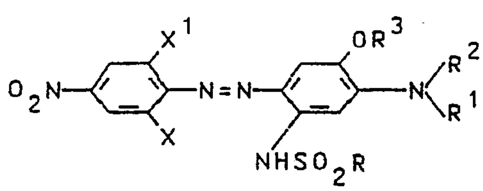

(IV)

in der X für Cyan, Chlor oder Brom und $X^1$ für Chlor oder Brom steht, in an sich bekannter Weise einer nukleophilen Austauschreaktion mit $CN^{\ominus}$ als nukleophilem Agens unterwirft.

10. Verwendung der Azofarbstoffe der Formel I eines oder mehrerer der Ansprüche 1 bis 7 oder deren Mischungen gemäß Anspruch 8 zum Färben und Bedrucken von hydrophoben Fasermaterialien.